(19) Europäisches Patentamt

European Patent Office

Office européen des brevets

(11) **EP 0 995 145 B1**

(12) **FASCICULE DE BREVET EUROPEEN**

(45) Date de publication et mention
de la délivrance du brevet:
**19.09.2001  Bulletin 2001/38**

(51) Int Cl.⁷: **G02B 27/58**, B23K 26/06,
G02B 5/18

(21) Numéro de dépôt: **98939692.4**

(22) Date de dépôt: **16.07.1998**

(86) Numéro de dépôt international:
**PCT/FR98/01558**

(87) Numéro de publication internationale:
**WO 99/04305 (28.01.1999 Gazette 1999/04)**

(54) **OPTIQUE DIFFRACTIVE A SYNTHESE D'OUVERTURE ET A FOCALE VARIABLE ET DISPOSITIF DE DECOUPE LASER INCORPORANT UNE TELLE OPTIQUE**

**BEUGUNGSOPTIK MIT ZUSAMMENGESETZTER APERTUR UND VERÄNDERLICHER BRENNWEITE UND LASERSCHNEIDEVORRICHTUNG MIT DIESER OPTIK**

**DIFFRACTIVE OPTICS WITH SYNTHETIC APERTURE AND VARIABLE FOCAL LENGTH AND LASER CUTTING DEVICE INCORPORATING SUCH AN OPTICS**

(84) Etats contractants désignés:
**DE GB**

(30) Priorité: **18.07.1997  FR 9709155**

(43) Date de publication de la demande:
**26.04.2000  Bulletin 2000/17**

(73) Titulaire: **COMMISSARIAT A L'ENERGIE ATOMIQUE**
**75015 Paris (FR)**

(72) Inventeurs:
• **GRANDJEAN, Jean-Paul**
**F-30200 Sabran (FR)**

• **MEYRUEIS, Patrick**
**F-67000 Strasbourg (FR)**
• **KRESS, Bernard**
**F-67350 Neubourg (FR)**
• **TWARDOWSKI, Patrice**
**F-67100 Strasbourg (FR)**

(74) Mandataire: **Weber, Etienne Nicolas**
**c/o Brevatome,**
**3, rue du Docteur Lancereaux**
**75008 Paris (FR)**

(56) Documents cités:
EP-A- 0 532 760      WO-A-97/43682
US-A- 4 786 124      US-A- 4 826 269

Printed by Jouve, 75001 PARIS (FR)

## Description

Domaine technique et art antérieur

L'invention concerne le domaine de la découpe laser, en particulier en vue d'applications au démantèlement et/ou au démontage.

L'intérêt de mettre en oeuvre des techniques laser pour réaliser des opérations de démantèlement est de pouvoir bénéficier d'une certaine flexibilité du procédé (possibilité de découpe à distance et de variation de la distance de découpe), ainsi que des gains potentiels importants au niveau des déchets secondaires de découpe (moins d'aérosols, moins de copeaux, des saignées de découpe plus fines).

Cependant, peu de systèmes ont été mis en oeuvre pour trois raisons essentielles :

- les sources lasers les plus puissantes, notamment à $CO_2$, nécessitent un transport de faisceau par miroirs, car la longueur d'onde des sources à $CO_2$ est incompatible avec les matériaux constituant les fibres optiques de puissance. Ces miroirs permettent de réaliser les mouvements nécessaires à la découpe. Le mécanisme qui en résulte est d'une grande complexité, en particulier lorsqu'il s'agit de traverser des confinements et des protections biologiques d'installations nucléaires.
- les sources dont le faisceau est transportable par fibres optiques (Nd:YAG par exemple) ont des puissances supérieures au kW depuis quelques années seulement. Par ailleurs, l'utilisation de la technique de transmission par fibre optique pose des problèmes, qui seront exposés ci-après,
- les procédés traditionnels de découpe par laser nécessitent l'utilisation de gaz d'assistance pour rendre la découpe faisable (chasse de la matière fondue, protection des optiques), ce qui exige par conséquent de suivre la pièce à découper à proximité (à environ 1 à 2 mm).

Ces contraintes ont rendu donc très difficile l'utilisation des lasers en découpe de démantèlement, où le confinement est obligatoire, où il faut traverser souvent des protections biologiques, et où le suivi de proximité est pratiquement impossible car la géométrie des objets à découper est à la fois complexe, mal connue (car souvent difficile à mesurer, notamment en ambiance nucléaire), et très variable.

La mise en oeuvre de fibres optiques a, quant à elle, posé un certain nombre de problèmes.

En particulier, à la sortie de la fibre, le faisceau émergeant est perturbé, du fait de son trajet ; par exemple, un faisceau de répartition gaussienne autour de son axe prend une forme annulaire en sortie d'une fibre classique à saut d'indice. Par conséquent, le maximum de la répartition d'énergie se trouve excentré, et les performances de découpe sont amoindries.

Il est possible de parvenir à corriger les perturbations du faisceau, pour des focales de l'ordre du mètre, avec des lentilles classiques en verre, de type BK7 par exemple. Ces lentilles sont transparentes à l'infrarouge (de longueur d'onde 1,06 μm) émis par un laser Nd:YAG. Mais la masse atteinte avec cette technologie, et pour cette focale, se situe aux alentours de 15 à 20 kilos. De plus, un tel ensemble est aussi fragile qu'un télescope de même ouverture (20 cm) et ne doit pas, par exemple, être l'objet de chocs qui modifieraient les réglages et mettraient en cause la sécurité d'exploitation.

En conséquence, l'asservissement de la focale à distance (zoom), nécessaire pour la découpe de pièces de géométrie complexes, est pratiquement impossible en utilisant des miroirs ou des lentilles classiques en verre, sans des paramètres d'encombrement, de fragilité et de masse excessifs. Il est donc peu envisageable d'accéder à des distances focales supérieures au mètre, pour la découpe laser de démantèlement, par des systèmes optiques classiques qui sont plus adaptés à des utilisations en laboratoire, et/ou à des focales faibles (inférieures au mètre) qu'à la découpe sur des chantiers nucléaires, à grande distance.

L'utilisation de miroirs pour construire une optique de focalisation augmenterait encore l'encombrement, pour un poids et une fragilité équivalente, compte tenu notamment des dispositifs de rigidification et de monture des miroirs.

La demande de brevet français FR-96 06088, du 15 Mai 1996, décrit une optique diffractive à synthèse d'ouverture et un dispositif de découpe laser incorporant une telle optique. Plus précisément, cette demande décrit un dispositif optique de focalisation d'un faisceau lumineux, comportant :

- un élément diffractif de Fourier, qui permet de séparer un faisceau incident en n faisceaux suivant n directions symétriques par rapport à un axe optique du dispositif,
- un élément diffractif comportant n lentilles de Fresnel, dont la pupille se situe fortement hors de l'axe ("off-axis"), permettant de refocaliser les n faisceaux sur l'axe optique.

Une telle optique diffractive assure la correction des aberration d'un faisceau résultant d'un transport de ce dernier par une fibre optique. La correction peut être effectuée par la lentille de Fourier ou par les lentilles de Fresnel, ou de façon partielle par les deux types de lentilles. Un tel dispositif optique est adapté à une exploitation de chantier, tel qu'une machine de démantèlement par laser.

Il est important, pour une telle machine, de pouvoir faire varier la focale du dispositif optique. Dans la demande FR-96 06088, est mentionnée la possibilité de réaliser une fonction de zoom par déplacement relatif (translation) d'un composant par rapport à l'autre. Cependant, pour le bon fonctionnement du dispositif optique, on cherche de préférence à atteindre un parallélisme assez précis (par exemple de l'ordre du micromètre) entre les deux éléments diffractifs. Or, un déplacement en translation affecte la précision du parallélisme entre les éléments diffractifs.

Il se pose donc le problème de trouver un dispositif optique de focalisation présentant un encombrement et un poids limité, peu fragile, compatible avec l'utilisation d'un laser de puissance, en particulier pour une utilisation dans un dispositif de découpe par laser, et permettant en outre un réglage aisé de la distance focale. En outre, un tel dispositif doit permettre une correction des défauts occasionnés pour une fibre optique de transmission d'un faisceau laser.

Exposé de l'invention

L'invention a tout d'abord pour objet un dispositif optique de focalisation d'un faisceau lumineux, comportant :

-   un élément diffractif de Fourier, qui permet de séparer un faisceau incident en n faisceaux, suivant n directions symétriques par rapport à un axe optique,
-   un élément diffractif comportant n composants, permettant de refocaliser les n faisceaux sur l'axe optique, chacun desdits n composants comportant une lentille hors d'axe dont la focale varie d'une valeur $f_1$ à une valeur $f_2$.

La lentille hors d'axe peut être de type "sword". La focale de l'élément est constante sur l'axe radial du dispositif mais varie continûment sur la circonférence de la lentille.

Un faisceau incident rencontre donc d'abord le premier élément diffractif de Fourier, qui permet de réaliser la séparation du faisceau incident en n sous-faisceaux, suivant n directions symétriques par rapport à l'axe optique. Puis, pour chaque position du deuxième élément diffractif par rapport à l'axe optique, chacun des n sous-faisceaux rencontre une lentille hors d'axe, et l'ensemble de ces lentilles permet de refocaliser les n sous-faisceaux sur l'axe optique. Lorsqu'on réalise une rotation du deuxième élément diffractif, chacun des n sous-faisceaux rencontre une autre partie de la lentille hors d'axe qui présente une autre distance focale : ainsi, on fait varier la distance focale du deuxième élément diffractif, et on refocalise les n sous-faisceaux sur l'axe optique, mais avec une distance focale différente. Les lentilles de type "sword" sont fabriquées par une pupille toroïdale, d'excursion $\frac{360}{n}$ degrés, et disposées de façon symétrique sur le substrat, de manière à ce que, pour une position donnée du deuxième élément diffractif, l'ensemble des n sous-faisceaux rencontre des portions de lentilles hors d'axe, de type "sword" de même distance focale.

Les avantages liés à ce dispositif sont, entre autres, les suivants.

L'optique diffractive assure la correction des aberrations d'un faisceau, qui résultent du transport de ce dernier par une fibre optique. Cette correction peut être effectuée par la lentille de Fourier ou par les lentilles hors d'axe, ou de façon partielle sur les deux types de lentille.

Ce dispositif permet de synthétiser une ouverture importante, avec des composants de taille réduite. C'est un montage[2] à synthèse d'ouverture, qui permet, par séparation du faisceau incident en n faisceaux identiques (par la lentille de Fourier), et focalisation de ces n portions de faisceau (par les n autres lentilles), de remplacer une optique de grande ouverture, donc de grande taille, par un ensemble de taille plus réduite.

Du point de vue de la réalisation, le problème de fabrication d'un composant diffractif de Fresnel de taille importante (100 mm de diamètre minimal) est ramené à l'usinage de n composants de taille inférieure.

Par ailleurs, l'utilisation d'un tel dispositif est aisée. La variation de focale est effectuée simplement en faisant faire une rotation de l'élément diffractif comportant n composants. Un tel mouvement affecte pas, ou peu, le réglage du parallélisme entre les éléments diffractifs : la variation de focale se fait simplement en déplaçant en rotation un des composants par rapport à l'autre. Le positionnement respectif d'un composant par rapport à l'autre, du fait de la formule choisie, n'est pas critique, et peut donc être maîtrisée avec des moyens simples, notamment des moyens mécaniques.

Un des deux éléments diffractifs du dispositif optique selon l'invention est composé d'une succession de pupilles de focale de plus en plus grande : cet élément permet de faire varier la focale d'une valeur minimale $f_1$ à une valeur maximale $f_2$, par une simple rotation de l'élément diffractif autour de l'axe optique, alors que les systèmes de l'art antérieur, en particulier le système décrit dans la demande FR-96 06088, mettent en oeuvre une translation pour réaliser la variation de focales. Or, un mécanisme permettant de réaliser une translation, tout en conservant un très bon parallélisme entre les deux éléments diffractifs, est difficile à réaliser et doit présenter une très grande précision et est d'un coût élevé.

Par ailleurs, on peut prévoir des moyens pour effectuer une rotation du deuxième élément diffractif autour de l'axe optique : on dispose ainsi de moyens pour modifier, sans intervention manuelle, la distance focale.

Un tel dispositif est adapté à une utilisation avec un laser de puissance. De plus, il constitue un composant optique peu sensible aux perturbations environnementales (vibrations, chocs, poussières, etc...) et est donc adapté à une exploitation de chantier, telle qu'une installation de démantèlement par laser. Enfin, ce dispositif peut être facilement remplacé, par exemple sous forme de modules : aucun positionnement ou réalignement optique critique n'est à mettre en oeuvre lors du remplacement.

Les deux éléments (élément de Fourier et l'ensemble des éléments hors d'axe) peuvent être disposés de manière à ce que le dispositif fonctionne en transmission, ou en réflexion. Dans ce dernier cas, les deux éléments sont disposés de manière à ce qu'un faisceau incident soit réfléchi par l'élément de Fourier et décomposé en n faisceaux, chacun de ces faisceaux étant ensuite réfléchi par une des lentilles hors d'axe vers un point de focalisation.

Des moyens de collimation du faisceau incident peuvent également être prévus, par exemple du type élément réfractif.

L'invention a également pour objet un dispositif pour engendrer un rayonnement laser focalisé, comportant des moyens pour engendrer un faisceau laser et un dispositif de focalisation tel que décrit ci-dessus.

On dispose ainsi d'un ensemble fonctionnant de manière assez simple, avec tous les avantages décrits ci-dessus en liaison avec le dispositif de focalisation.

En particulier, si, à la sortie du laser, le faisceau est transmis par fibre optique, le dispositif de focalisation permet de corriger les aberrations liées au transport par fibre optique.

Enfin, l'invention a également pour objet un dispositif pour la découpe laser, comportant un dispositif pour engendrer un rayonnement laser focalisé, tel que ci-dessus.

L'optique de focalisation mise en oeuvre permet de réaliser un dispositif utilisable sur un site de découpe. Des distances focales de l'ordre du mètre (ou plus) peuvent être aisément atteintes, ce qui n'est pas envisageable avec des systèmes optiques classiques (composants réfractifs). La fonction "zoom" est réalisée de manière simple et sûre, et ne nécessite pas la mise en oeuvre de miroirs et/ou des lentilles en verre, encombrants et fragiles : il suffit en effet de réaliser une rotation d'un des composants par rapport à l'autre pour obtenir un effet de variation de focale. Ce mouvement n'affecte pas, ou peu, le parallélisme entre les éléments diffractifs.

En outre, ce procédé ne met pas en oeuvre de projection de gaz d'appoint, au niveau de la zone d'impact du faisceau laser.

Des moyens peuvent être prévus pour déclencher, de manière impulsionnelle et relaxée, les moyens d'émission du laser.

Le fait d'utiliser un laser fonctionnant en mode impulsionnel permet de créer un plasma très énergétique au voisinage de la zone d'impact sur la pièce à découper. En fait, le mode impulsionnel a pour conséquence d'ajouter à l'échauffement du matériau un effet de chasse qui permet de remplacer le gaz d'assistance utilisé dans les applications industrielles classiques. Cet effet de chasse s'explique par la qualité du plasma, très énergétique, créé par les impulsions laser.

Ce plasma a un autre effet positif sur la découpe : il permet une autofocalisation du faisceau dans l'épaisseur du matériau découpé. Ceci explique que, malgré l'absence de gaz d'assistance, on obtienne des découpes de très bonne qualité (les saignées sont très fines, à bords parallèles, et d'une taille sensiblement identique au diamètre de la tache focale, et à bords parallèles) et profondes (il devient possible de découper des matériaux épais). Le fait d'obtenir des saignées fines permet en outre de réduire les déchets secondaires produits, tels que les gaz ou des sédiments du type bille métallique, et donc aussi d'éviter de salir de manière trop rapide les moyens de focalisation présents en sortie de fibre optique.

Enfin, le fonctionnement en mode impulsionnel permet, toujours du fait de la création d'un plasma, une plus grande tolérance sur les autres paramètres de découpe : par exemple, la précision de la focalisation est assez peu critique, en tout cas moins que dans les techniques mettant en oeuvre un faisceau continu. Le plasma permet de disposer d'une densité d'énergie plus importante qu'en mode continu. Il y a en outre moins besoin d'asservir la focalisation, du fait de cette tolérance et il est possible de découper en épaisseur du fait de l'autofocalisation du faisceau.

L'utilisation d'un seul mode laser (mode relaxé) permet quant à elle d'obtenir une stabilité modale, gage de l'uniformité du couplage pour la découpe.

Le pilotage d'un laser en mode impulsionnel est aisé : la hauteur, la largeur et l'espacement des impulsions sont réglables. Il est donc possible d'optimiser les opérations de découpe en fonction du contexte, étant donné l'effet de ces paramètres d'impulsion sur la physique spatio-temporelle du plasma créé au voisinage de la zone d'impact. Par exemple, si le découpage est effectué sur des petites épaisseurs, il n'est pas nécessaire d'envoyer des impulsions très énergétiques.

L'extrémité de la fibre optique peut faire partie d'une tête de découpe.

Il est également possible de prévoir des moyens de contrôle de la position de l'extrémité de la tête de découpe et/ou des moyens de contrôle de la focalisation du faisceau.

Par ailleurs, des moyens peuvent être prévus pour déplacer l'extrémité de la tête de découpe. Ainsi, dans le cas d'une pièce à découper qu'il n'est pas possible de déplacer, c'est la tête de -découpe elle-même, que l'on déplace. Ces moyens de déplacement peuvent par exemple comporter un ou plusieurs bras robotisé(s).

L'invention concerne également un procédé de découpe laser d'une pièce, mettant en oeuvre un dispositif tel que défini ci-dessus.

Un tel procédé comporte par exemple les étapes suivantes :

- mesure d'une distance d représentative de la distance entre le dispositif de découpe et la pièce,
- comparaison de la distance d mesurée et de la distance focale f du dispositif optique de focalisation,

- si f est différent de d, ajustement de f par rotation de l'élément diffractif comportant les n composants.

La comparaison et l'ajustement peuvent être réalisés en continu, pendant la découpe de la pièce. Lorsque d n'est pas dans la plage de variations de f du second élément diffractif, il peut être procédé à l'ajustement de d par déplacement du dispositif de focalisation.

Brève description des figures

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :

- les figures 1A et 1B représentent un dispositif de focalisation selon l'invention, dans un mode de réalisation en transmission, respectivement en vue de côté et de face,
- la figure 2 représente un dispositif de focalisation selon l'invention, dans un mode de réalisation en réflexion,
- la figure 3 est un schéma d'étapes de calcul d'un élément de Fourier,
- les figures 4A-4C représentent des étapes de réalisation d'un masque de chrome,
- les figures 5A-5D représentent des étapes de transfert photolithographique et d'usinage d'un substrat,
- les figures 6A-6D représentent des étapes de réalisation d'éléments à $2^n$ niveaux de phase,
- la figure 7 est un schéma d'un dispositif de découpe selon l'invention,
- la figure 8 représente un dispositif de correction automatique de la distance focale.

Description détaillée de modes de réalisation de l'invention

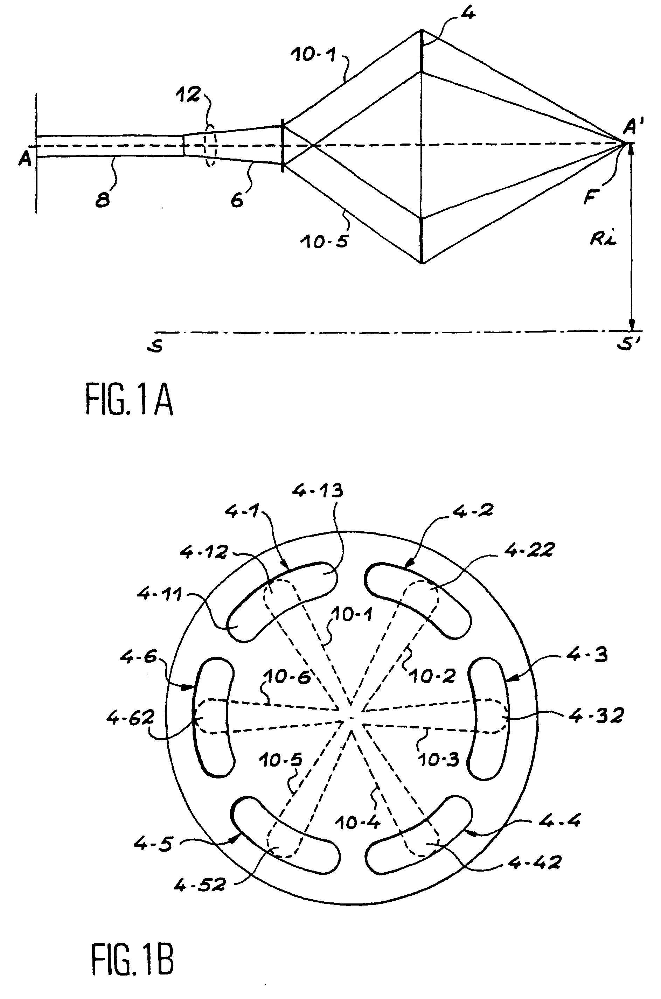

Un premier mode de réalisation d'un dispositif optique de focalisation selon l'invention va être décrit, en liaison avec les figures 1A et 1B. Le système comporte deux éléments diffractifs 2, 4.

Le premier élément 2 est un élément diffractif de Fourier (lentille de Fourier), qui permet de séparer un faisceau incident 6 (amené par exemple par l'intermédiaire d'une fibre optique 8) en n faisceaux identiques (n=4, 6, 8 ou 10), dans n directions symétriques par rapport à l'axe optique AA'.

Le second élément 4 comporte n composants 4-1, 4-2, ..., 4-6, chacun de ces n composants consistant en une lentille "off-axis" de type "sword". De telles lentilles sont par exemple décrites dans l'article de D. Leseberg paru dans Applied Optics, vol. 26, n°20, p. 4365-4390 (1987). Ce sont des lentilles hélicoïdales sur l'axe. Une lentille de type "sword" peut être considérée comme une suite de lentilles de Fresnel de focales variables. Dans chaque lentille, on passe progressivement et continûment d'une distance focale $f_1$ à une distance focale $f_2$. Par exemple, si on considère la suite continue 4-1 de la figure 1B, les zones 4-11 et 4-13 d'extrémité définissent respectivement des lentilles de focale $f_1$ et $f_2$, tandis que la zone intermédiaire 4-12 définit une lentille de focale f, avec $f_1 < f < f_2$. Selon un exemple, un élément 4 comportant n=4 composants a été réalisé, les focales de chaque composant variant de $f_1$=0,5 m à $f_2$=1,5 m.

On désigne par $\alpha_{max}$ l'excursion angulaire maximale de la pupille sur laquelle est codée la lentille "off-axis" (hors d'axe).

Un faisceau initial rencontre donc d'abord l'élément 2 de Fourier, est séparé en n faisceaux 10-1, ..., 10-6 (n=6 sur les figures 1A et 1B) qui sont ensuite dirigés vers n composants 4-1, 4-2, 4-3, 4-4, 4-5, 4-6. Ceux-ci, à leur tour, permettent la focalisation des n portions de faisceau en direction d'un point F de l'axe AA'. Globalement, l'ensemble du dispositif fonctionne donc comme une lentille convergente qui refocalise l'énergie sur l'axe optique, à une certaine distance focale. Cette dernière dépend de l'orientation du deuxième élément diffractif autour de l'axe optique AA'. Ainsi, sur l'exemple de la figure 1B, l'orientation est telle que les différents faisceaux 10-1, ..., 10-6 rencontrent tous les zones des composants 4-1, ..., 4-6 définissant chacune une lentille de focale f. Pour une rotation de l'ensemble autour de l'axe AA', les différents faisceaux sont amenés à rencontrer les zones des composants 4-1, ..., 4-6 définissant des lentilles de focale $f_1$ ou bien celles de focale $f_2$. Ainsi, on peut faire facilement varier la distance focale de l'ensemble, et donc la position du point F de focalisation sur l'axe AA'.

Le dispositif de focalisation selon l'invention met donc en oeuvre un composant de Fourier, pour répartir le faisceau sur un composant opérant par synthèse d'ouverture en mode diffractif, avec un codage continu des lentilles sur une zone pupillaire reproduite n fois à l'identique. L'ouverture effective du composant obtenu dépasse la dimension physique de ce composant.

Eventuellement, le faisceau d'entrée 6 peut être collimaté à l'aide de moyens 12, de type diffractif, par exemple une lentille de collimation sphérique opérant en transmission.

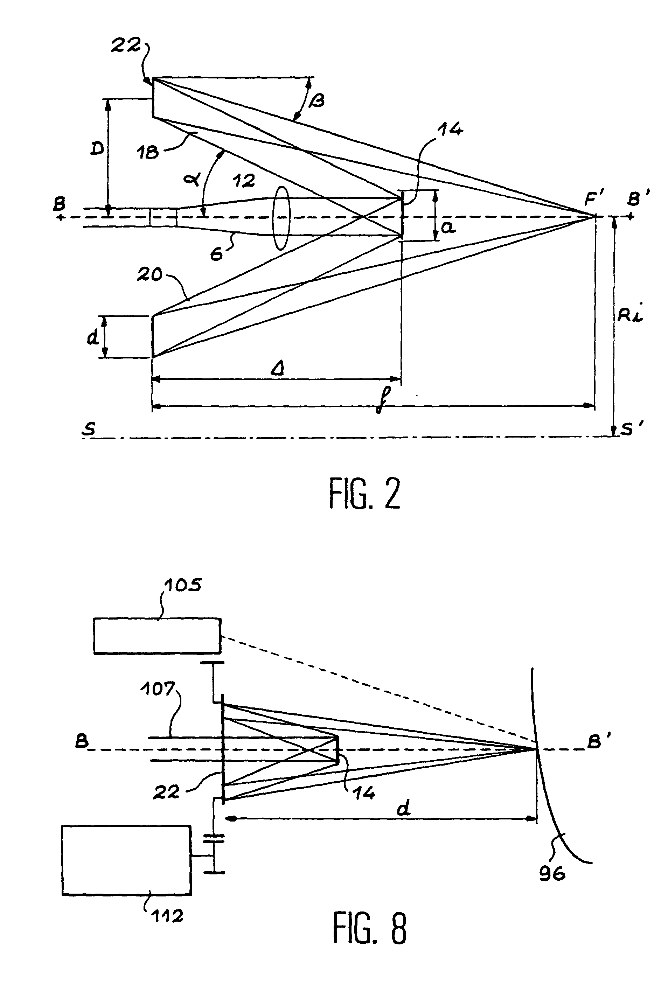

Un autre mode de réalisation de l'invention va être décrit en liaison avec la figure 2. Ce second mode de réalisation fonctionne "en réflexion". Comme dans le cas de la figure 1, un faisceau 6, par exemple en sortie d'une fibre 8, est envoyé en direction d'un élément diffractif de Fourier 14. Ce dernier fonctionnant cette fois en réflexion. Eventuellement, le faisceau 6 peut avoir traversé préalablement les moyens 12 de collimation, par exemple une lentille sphérique opérant en transmission.

L'élément de Fourier 14 répartit la lumière du faisceau incident en n faisceaux identiques, dans n directions symétriques par rapport à l'axe BB'. Ces n faisceaux 18, 20, ... sont réfléchis en direction du second élément 22 de ce dispositif de focalisation. Ce second élément comporte en fait n composants, chacun de ces composants définissant une suite continue de lentilles de Fresnel. Chacune de ces lentilles va permettre de traiter un des faisceaux 18, 20, ... obtenus après réflexion sur la lentille de Fourier 14, ce traitement ayant lieu en diffraction. Les n faisceaux sont alors focalisés en un même point F' : on obtient en fait n taches de focalisation qui vont interférer entre elles. La position du point F' sur l'axe BB' dépend, comme expliqué ci-dessus, de la position de l'élément 22 autour de l'axe BB'.

Lors des réflexions successives sur les différents éléments, des ordres différents sont réfléchis dans des directions différentes, et seuls certains ordres sont réfléchis en direction du point F'. L'énergie issue des ordres indésirables peut être récupérée et piégée dans des cônes en matériau léger.

Dans tous les modes de réalisation, le dispositif selon l'invention opère globalement comme une lentille. Mais, pour des performances équivalentes (même ouverture), le dispositif selon l'invention est beaucoup plus compact. L'axe de la lentille ainsi synthétisée n'est pas confondu avec l'axe optique (AA' sur la figure 1A, BB' sur la figure 2). L'axe de la lentille synthétique est repéré par l'axe SS' sur les figures 1A et 2 : il se trouve à une distance $R_i$ de l'axe optique du dispositif.

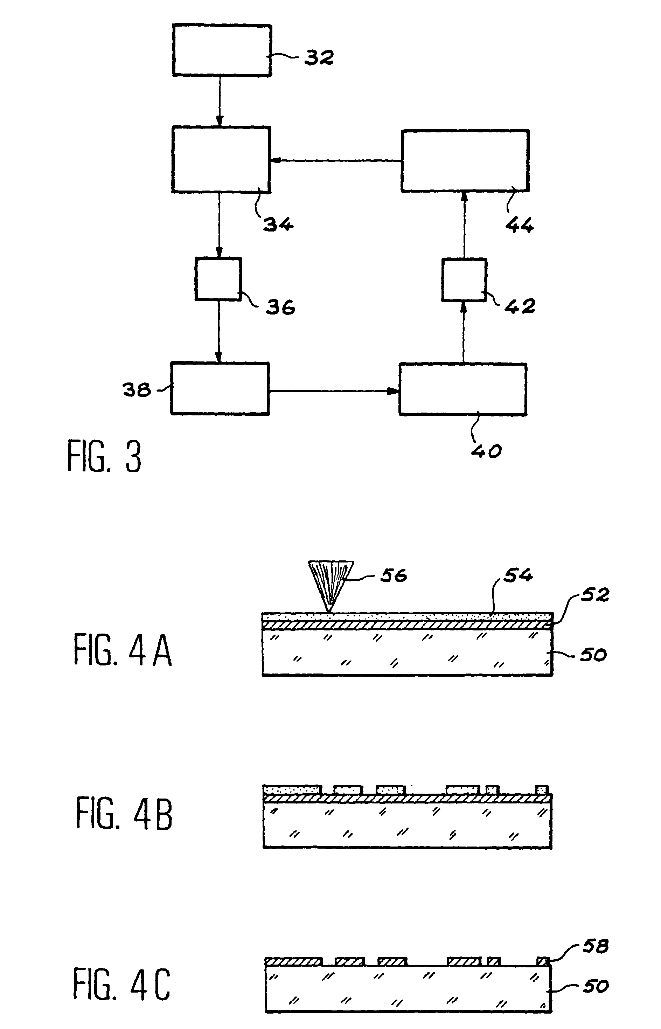

Un procédé de calcul des éléments va maintenant être décrit. Le premier élément de Fourier peut être par exemple optimisé à l'aide d'un algorithme itératif, appelé algorithme de GERCHBERG-SAXTON, décrit par exemple dans l'article de R.W. GERCHBERG et al., intitulé "A practical algorithm for the determination of phase from image and diffraction plane pictures", paru dans Optik, vol. 35, n°2, pp. 237-246, 1972. Cet algorithme permet de calculer rapidement la phase d'une fonction d'onde complète, dont les intensités dans le plan de diffraction et dans le plan image d'un système optique sont connues. Les étapes de cet algorithme vont être brièvement rappelées, en liaison avec la figure 3.

Les contraintes imposées sont les intensités échantillonnées dans le plan image et dans le plan de diffraction. Les amplitudes sont proportionnelles à la racine carrée des intensités mesurées. Ces données peuvent être stockées dans une zone mémoire d'un micro-ordinateur.

Dans une première étape 32, un générateur de nombres aléatoires génère un ensemble de nombres aléatoires, compris entre $\pi$ et $-\pi$, ce qui correspond à une estimation initiale de la phase des amplitudes images échantillonnées.

Les valeurs aléatoires sont ensuite multipliées par les amplitudes du plan image (étape 34). Ainsi, est engendrée une fonction complexe, discrète, dont est calculée ensuite la transformée de Fourier (étape 36) par un algorithme de transformée de Fourier rapide (FFT). Il en résulte une fonction complexe, dont les phases sont extraites (information complexe résultante dans le champ lointain : étape 38). Ces valeurs de phase sont combinées avec les valeurs d'amplitude dans le plan de diffraction (contrainte du plan de Fourier : étape 40), et la fonction obtenue subit (étape 42) une transformation de Fourier inverse rapide, dont la phase est extraite (information complexe résultante dans le plan de l'élément diffractif : étape 44). Celle-ci est ensuite combinée avec les amplitudes du plan image (étape 34), pour former une nouvelle estimation de la fonction complexe dans le plan image. Le processus est ensuite répété de manière itérative. Après N itérations, on obtient la phase de l'élément diffractif optimisé.

En fait, l'algorithme de Gerchberg-Saxton est un algorithme de calcul de phases. On dispose de deux champs conjugués par une transformée de Fourier (le champ de l'hologramme et le champ lointain, composé de n points symétriques limités par la diffraction).

L'algorithme laisse évoluer la phase dans les deux champs. La phase résultante dans le champ de l'hologramme est alors numérisée en deux seules valeurs : 0 et $\pi$.

Cet algorithme est un algorithme de modélisation et d'optimisation : la modélisation se fait pendant la première boucle de l'algorithme, et l'optimisation pendant les suivantes.

Dans le cas particulier du dispositif optique de focalisation selon l'invention, les contraintes retenues sont les intensités dans le plan de l'élément diffractif, la divergence du faisceau issu de la fibre multimode, la contrainte dans le champ lointain étant la distribution d'énergie selon les n pupilles de Fresnel 22.

Le second élément, à ouverture synthétique, est donné analytiquement, par un calcul sur C.A.O. optique classique de type code V, disponible commercialement, et est asphérique. Chaque composant (suite continue de lentilles) est représentée par exemple par le profil de phase suivant :

$$\phi(x, y) = \frac{\pi}{\lambda} \frac{(x^2+y^2)}{f_1 + \dfrac{\arctg\frac{y}{x}}{\alpha_{max}}(f_2-f_1)}$$

où $\lambda$ est la longueur d'onde et où $\alpha_{max}$ est l'excursion angulaire maximale de la pupille toroïdale sur laquelle est codé(e) chaque composant ou lentille de type "sword".

La fabrication des deux éléments du dispositif optique selon l'invention peut se faire par microlithographie à faisceaux d'électrons. Des masques binaires de chrome sont préparés par faisceau d'électrons focalisé à 0,1 $\mu$m, puis transférés et alignés l'un après l'autre par rapport à un substrat final, puis usinés ioniquement. Par exemple, on utilise 4 masques de chrome pour réaliser un élément avec 16 niveaux de phase, d'une taille d'environ 2 cmx2 cm, composé de 1024x1024 cellules carrées, chaque cellule représentant une unité de 4 $\mu$mx4 $\mu$m. L'efficacité de diffraction d'un tel élément est de l'ordre de 80%, c'est-à-dire que seulement 20% de la lumière est perdue.

Les figures 4A à 4C représentent des étapes de réalisation d'un masque de chrome. Sur un substrat en quartz 50 (3 pouces de diamètre, 5 mm d'épaisseur), on dépose une couche d'or 52 (épaisseur 50 nm, diamètre 0,5 pouce), ainsi qu'une couche de résine 54 (de type PMMA) pouvant être attaquée par faisceau d'électrons 56. Après gravure de la couche 54 (figure 4B), on procède à un décapage de la couche d'or 52, puis de la couche de résine 54, par trempage dans un bain acide. On obtient ainsi le masque d'or 58 désiré (figure 4C).

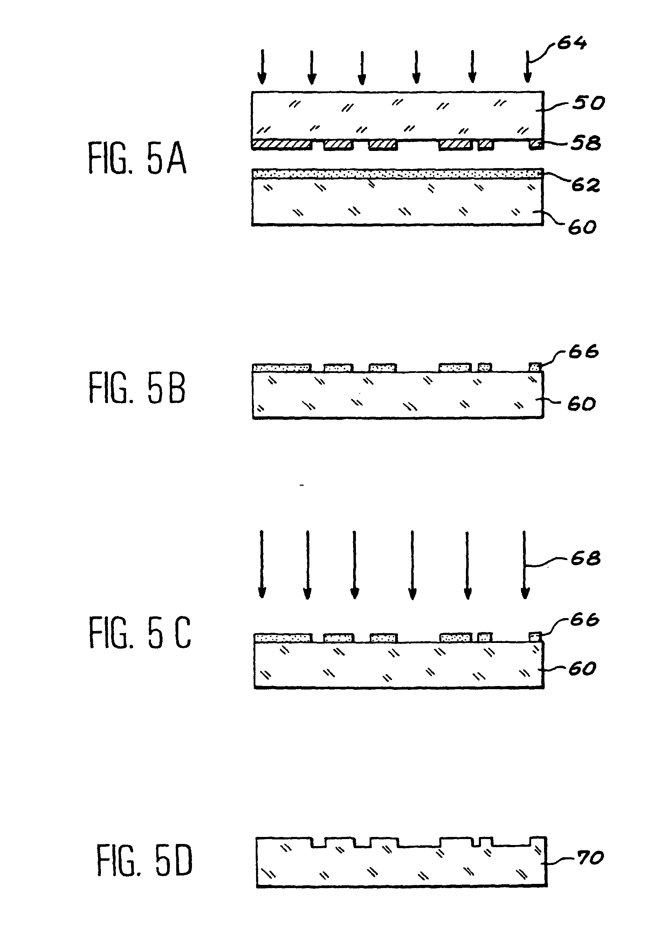

Les figures 5A à 5D représentent les étapes de transfert photolithographique du masque binaire de chrome 58 réalisé antérieurement, puis d'usinage du substrat final, pour obtenir un élément à deux niveaux. Sur un substrat de quartz 60 est déposée une couche de matériau photorésistant 62. Un faisceau 64 de rayonnement ultraviolet est dirigé en direction du substrat 60, en traversant le masque d'or 58 (figure 5A). On obtient ainsi (figure 5B) une couche photorésistante 66 reproduisant les motifs du masque d'or 58. Un faisceau 68 d'ions argon collimatés permet de décaper la surface du substrat 60 pour obtenir un élément 70, codé en surface avec deux niveaux de phase (figure 5D).

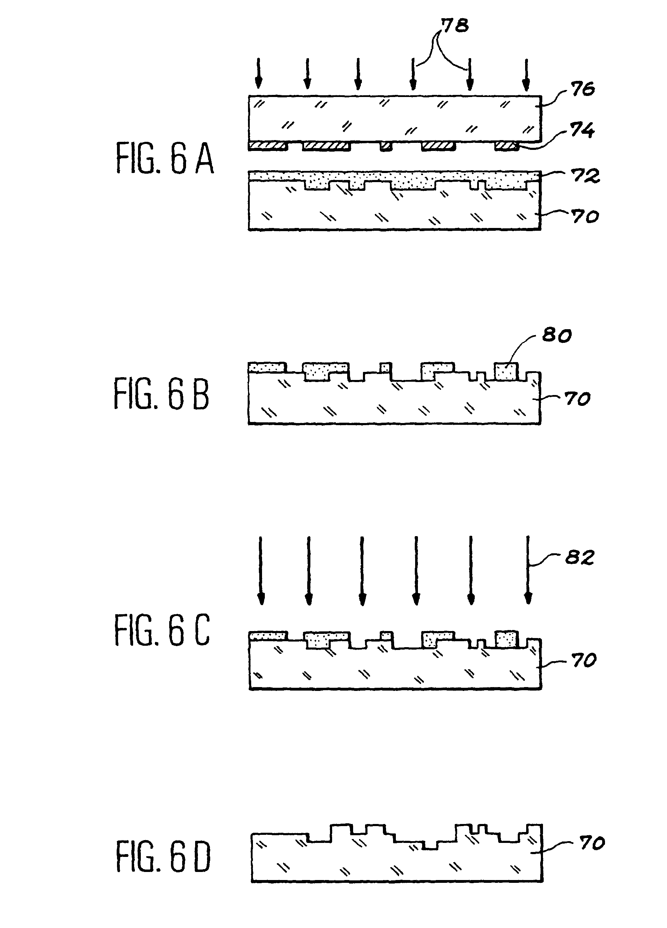

Pour obtenir des niveaux de phase d'ordre supérieur, le substrat 70 est recouvert d'une couche de matériau photorésistant 72 (figure 6A). Un second masque binaire, de chrome 74, est formé sur un substrat 76 selon la technique décrite ci-dessus en liaison avec la figure 4A-4C. Puis, le masque 74 et le substrat 70 sont alignés, et un faisceau de rayonnement ultraviolet collimaté 78 est dirigé en direction du substrat 70, en traversant le masque binaire 74 (figure 6A). On obtient ainsi un substrat 70 dont la surface, déjà codée à deux niveaux, est recouverte d'une couche photorésistive 80 elle-même codée à deux niveaux (figure 6B). Un faisceau d'ions argon collimaté 82 (figure 6C) permet de transférer le codage de la couche photorésistive en surface de l'élément 70, qui est ainsi codé à 4 niveaux de phase (figure 6D).

D'une manière générale, on utilise n masques binaires pour coder un élément à $2^n$ niveaux de phase (n>2).

Les éléments de Fresnel sont réalisés en tenant compte du fait que les N composants codent exactement la même information. Pour réaliser un codage à $2^n$ niveaux de phase, on ne prépare donc que N, et non pas nN, masques de chrome. Pour la réalisation des masques et pour la gravure des substrats, les mêmes techniques que celles exposées ci-dessus, en liaison avec les figures 4A-6D, sont mises en oeuvre. Le premier masque de chrome est transféré sur un substrat de quartz, et ceci n fois (pour les N composants) suivant une symétrie de révolution. Après usinage ionique, les deuxième, troisième, $n^{ième}$, masques de chrome sont transférés et usinés ioniquement, jusqu'à obtention de $2^n$ niveaux de phase sur les N éléments. Dans le cas de la réalisation de 16 niveaux de phase (n=4), les substrats de quartz utilisés sont de taille 6 poucesx6 pouces.

Dans tous les cas, l'aligneur de masques utilisé permet d'aligner les différents masques à $\pm 0,5$ $\mu$m.

Du point de vue pratique, la réalisation des composants selon l'invention met en oeuvre les étapes suivantes de logiciel, qui incorporent à la fois les étapes de l'algorithme de Gerchberg-Saxton et celles de préparation de la microlithographie qui vient d'être exposée :

1) Remplissage d'une matrice 1024 par 1024 points par une phase aléatoire (i.e. des valeurs prises au hasard entre 0 et $2\pi$) et remplissage d'une matrice 1024 par 1024 par la répartition d'intensité du faisceau entrant (faisceau YAG sortant de la fibre multimode).
2) Transformation de Fourier complexe (FFT classique) directe.
3) L'information (matrice) de phase est conservée, l'information (matrice) d'amplitude est remplacée par la répartition d'amplitude désirée dans le champ lointain (ici, huit spots lumineux symétriques).
4) Transformation de Fourier complexe inverse.
5) L'information de phase est conservée et l'information d'amplitude est remplacée par la répartition d'amplitude sortant de la fibre multimode.

Les étapes 2) à 5) sont répétées n fois (n=nombre d'itérations).
6) L'information de phase (matrice) est ramenée, par seuillage, à deux niveaux :

a) si la fonction de phase continue, obtenue par l'algorithme de Gerchbert-Saxton, a une valeur supérieure à $\frac{\pi}{2}$, la valeur 1 est attribuée à la phase,

b) Sinon (0 fonction de phase $\leq \frac{\pi}{2}$), la valeur 0 est attribuée à la phase.

Dans le processus de fabrication, 0 veut dire pas de gravure, et 1 veut dire gravure (à une profondeur de $\lambda/(2(n-1))$. ($\lambda$ : longueur d'onde, n : indice de réfraction du substrat).
7) Cette information de phase est ensuite formatée sous le format GDSII.
8) Le fichier est soumis au laboratoire de fabrication microlithographique.
9) L'élément est répliqué en x et y pour aboutir à une pupille totale circulaire de 2 cm de diamètre.

Le dispositif de focalisation selon l'invention peut être utilisé en combinaison avec des moyens pour produire un faisceau laser. En particulier, il est adapté au faisceau impulsionnel, de grande intensité, produit par des lasers tels que par exemple les lasers Nd:YAG, ou à iode-oxygène. Les rayonnements produits par ces sources lasers présentent l'avantage d'être transmissible par fibre optique et, par conséquent, il est possible de disposer le dispositif de focalisation selon l'invention en sortie de fibre optique, cette dernière transmettant le faisceau produit par le rayonnement laser. Dans tous les cas, le point focal peut être aisément modifié en déplaçant par rotation le second élément par rapport au premier élément. Les moyens à mettre ainsi en oeuvre sont peu encombrants.

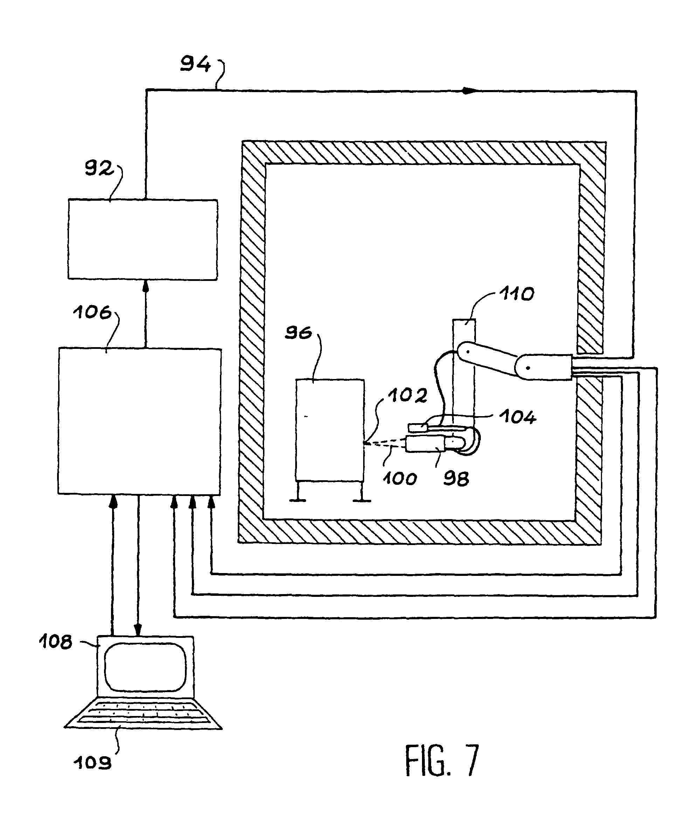

Une mise en oeuvre de l'invention, dans le cadre d'un dispositif de découpage ou de démantèlement, va maintenant être décrite en liaison avec la figure 7. La référence 92 désigne une source laser, par exemple une source Nd:YAG de puissance, utilisable en mode impulsionnel, et dont les impulsions peuvent être paramétrées en fréquence, en énergie et en durée. Une fibre optique 94 permet un transport du rayonnement issu de la source impulsionnelle laser en direction d'une pièce à découper 96, située à distance. Dans le cas d'opérations de démantèlement, une telle distance peut atteindre une dizaine de mètres. Le faisceau 100 est ensuite projeté en direction de la pièce 96, l'extrémité de la fibre optique pouvant être maintenue par exemple dans une tête de découpe 98. Un dispositif optique de focalisation tel que décrit ci-dessus (et non représenté sur la figure 7), permet la focalisation du faisceau laser 100 au niveau d'une zone d'impact 102, à proximité de la surface de la pièce à découper. Ce dispositif de focalisation, à distance focale variable, peut être incorporé dans la tête de découpe 98. Par ailleurs, des moyens 104, comportant par exemple une caméra et/ou un télémètre et/ou un profilomètre, peuvent être prévus à proximité de la tête 98, ou de l'extrémité de la fibre optique 94, afin de permettre une évaluation de la distance à la surface de la pièce.

Les données transmises à partir des moyens 104 peuvent être analysées dans un dispositif de commande 106 prévu à cet effet. Un dispositif de commande des impulsions (fréquence, durée, énergie, ...) de la source laser 92 pouvant être prévu, il peut par exemple être intégré dans le dispositif de commande 106. Ce dispositif peut comporter par exemple un micro-ordinateur ou microprocesseur conventionnel convenablement programmé pour l'analyse des données. Les instructions de programme appropriées peuvent être enregistrées sur disque magnétique ou sur des unités conventionnelles de type RAM ou ROM. Par ailleurs, peuvent être également prévus des moyens 108 d'affichage des données analysées ou de l'image visualisée à l'aide de la caméra, un opérateur pouvant éventuellement introduire des données de pilotage ou de commande à l'aide d'un clavier 109, ou poste de commande. L'opérateur peut ainsi prendre une décision quant à la nécessité de déplacer l'extrémité de la fibre optique, et/ou de modifier la focalisation, par rapport à la surface de la pièce 96.

Des moyens de contrôle de la position de l'extrémité de la fibre et/ou des moyens de contrôle de la focalisation du faisceau peuvent également être prévus ; en particulier, il peut être prévu un déplacement automatique de la tête de découpe lorsqu'une certaine distance, par exemple entre la tête de découpe et la surface de la pièce 96 à découper, a été mesurée et lorsqu'il est établi par des moyens de comparaison, ou lorsque l'opérateur constate, que cette distance mesurée ou évaluée s'écarte, d'une trop grande marge, d'une certaine distance prédéterminée, enregistrée au préalable, par exemple dans les moyens de mémorisation mentionnés ci-dessus. Il peut également être prévu une modification automatique de la focalisation lorsqu'il est constaté que la distance, par exemple entre la tête de découpe et la pièce 96, est différente d'une certaine distance focale. Un exemple de moyens de variation automatique de la focale est donné ci-dessous, en liaison avec la figure 8.

Par ailleurs, il est souvent préférable de déplacer la tête de découpe par rapport à la pièce, plutôt que l'inverse, afin de réaliser un sillon de découpe. En effet, la pièce est souvent volumineuse, il peut s'agir par exemple d'une partie d'une installation nucléaire. Dans ce cas, des moyens de déplacement de la tête de découpe le long d'une trajectoire pouvant être contrôlée par l'opérateur peuvent être prévus. Ainsi, dans l'exemple représenté sur la figure 7, une tête de découpe 98 incorpore l'extrémité de la fibre, et cette tête de découpe est déplacée par rapport à la pièce à l'aide d'un bras robotisé 110 permettant divers déplacements dans l'espace (translation, pivotement par rapport à certains axes). Le contrôle d'un bras robotisé 110, à distance, peut être réalisé à l'aide de la console de commande 106 et des moyens de commande interactifs 108, 109. Dans ce type de commande, il peut en outre être intéressant de pouvoir faire varier la vitesse de déplacement de la tête par rapport à la pièce à découper.

L'identification des cibles et leur suivi peuvent être faits automatiquement par des dispositifs de saisie et analyse de forme par ordinateur, ou de façon semi-automatique en incluant un opérateur dans la boucle, en utilisant les ressources des dispositifs de téléprésence, grâce notamment aux méthodes développées pour la téléopération assistée par ordinateur. Ces méthodes peuvent être implémentées dans le micro-ordinateur du dispositif de commande 106.

La figure 8 représente un dispositif de variation automatique de focalisation. Le dispositif de focalisation est du type de celui décrit ci-dessus, en liaison avec la figure 2 : il comporte un premier élément diffractif de Fourier 14 puis un élément de Fresnel 22, l'ensemble fonctionnant en réflexion. L'élément 22 est constitué comme déjà décrit ci-dessus, c'est-à-dire comporte un ensemble de N composants, chaque composant définissant une suite continue de lentilles de Fresnel pour laquelle la distance focale varie progressivement et continûment d'une distance $f_1$ à une distance $f_2$. Le réglage

angulaire de la position de l'élément 22 autour de l'axe BB' définit le choix de la distance focale f ($f_1 \leq f \leq f_2$),

Si l'on désigne par d la distance entre la tête de découpe et la pièce 96 (en fait, la distance entre le plan de l'élément 22 et la pièce 96), on cherche par exemple à réaliser : d=f, ce qui signifie que le faisceau converge sur la pièce à découper. La loi de variation de la focale, en fonction de l'angle de rotation θ de l'optique de focalisation autour de BB' est définie dès le départ, est invariable et connue.

Un dispositif mécanique 112 permet de déplacer l'élément 22 en rotation autour de l'axe BB'. Plus précisément, le support sur lequel sont formés les différents éléments de Fresnel peut être guidé par l'intérieur d'un système de guidage à arbre creux entraîné par un moteur pas à pas.

Le dispositif peut par exemple fonctionner de la façon suivante :

1) Mise en place approximative de la tête de découpe : celle-ci est entraînée le long d'une trajectoire d'approche par un dispositif de déplacement mécanique (par exemple un bras robotisé) jusqu'à un point de départ choisi a priori, de préférence le plus perpendiculairement possible par rapport à la pièce à découper ; une visualisation, par exemple un pointeur optique, peut constituer un guide utile pour ce positionnement.

2) Positionnement de l'optique de focalisation 22 approximativement au milieu de la plage $f_1$-$f_2$ de variation de focale.

3) Mesure de la distance d, comparaison avec la distance focale donnée par la valeur θ, et détermination de l'écart entre la distance d et la distance focale.

4) Ajustement de la distance d par mouvement mécanique du dispositif de déplacement de la tête de découpe, ou bien ajustement de la distance focale par mise en rotation de l'élément 22, jusqu'à obtenir l'égalité d=f.

5) Lancement de la phase de découpe, c'est-à-dire envoi d'un faisceau laser sur la tête de découpe, et focalisation de celui-ci sur la pièce.

6) Pendant la découpe, contrôle en continu de la distance d, et ajustement de la distance focale à l'aide du moyen 112 de mise en rotation de l'élément 22 (rotation de l'optique de focalisation).

7) Si, pendant la phase de découpe, d sort de la plage de variation de f, on peut ajuster la distance d à l'aide du dispositif de déplacement de la tête de découpe ; on peut alors reprendre la procédure à l'étape 2) ci-dessus, éventuellement après arrêt de la source laser.

Un procédé de découpe, à optique diffractive, mettant en oeuvre un dispositif optique de focalisation selon l'invention, peut donc comporter, outre les opérations préparatoires relatives à la mise en place d'une tête de découpe dont la distance focale f peut varier de $f_1$ à $f_2$, les étapes suivantes :

- mesure de la distance d séparant la tête de découpe de la pièce à découper,
- comparaison des valeurs f et d,
- ajustement (par exemple en continu) des valeurs f et d, par exemple pendant le découpage ; l'ajustement peut être effectué par rotation de l'ensemble d'éléments diffractifs de Fresnel.

Au préalable, la mise en place de la tête peut consister en un déplacement de la tête jusqu'à l'obtention de l'égalité f=d,

Le dispositif de découpe selon l'invention constitue une instrumentation homogène, efficace, car compacte, moins sensible que toutes les autres technologies connues aux perturbations environnementale (vibrations, chocs, poussières, etc...), y compris les rayonnements ionisants : l'ensemble est donc véritablement adapté à une exploitation de chantier, par exemple sur des sites de démantèlement de centrale nucléaire. Le système de focalisation en optique diffractive numérique, très léger (de l'ordre de 250 g), peut être remplacé facilement sous forme de module ; grâce aux spécificités du montage, aucun positionnement et réalignement optique n'est à traiter. Les opérations de maintenance du dispositif de découpage peuvent être simplifiées, les parties usées pouvant être remplacées facilement par échange standard de module : par exemple lampe flash pour le pompage du laser ou fibre optique à remplacer chaque 5000 heures d'utilisation par échange standard. Les fibres démontées, si elles ne sont pas trop irradiées, peuvent être repolies aux extrémités pour être remontées pour un autre cycle de 5000 heures, et ceci 2 à 3 fois.

**Revendications**

1. Dispositif optique de focalisation d'un faisceau lumineux, comportant :

   - un élément diffractif de Fourier (2, 14), qui permet de séparer un faisceau incident (6) en n faisceaux (10-1, 10-2, 10-3, 10-4, 10-5, 18, 20), suivant n directions symétriques par rapport à un axe optique (AA', BB'),
   - un élément diffractif (4, 22) comportant n composants (4-1, 4-2, ..., 4-8), permettant de refocaliser les n faisceaux sur l'axe optique, chacun desdits n composants comportant une lentille hors d'axe dont la focale varie d'une valeur $f_1$ à une valeur $f_2$ transversalement sur l'élément diffractif et est constante radialement sur ledit élément.

2. Dispositif optique de focalisation selon la revendication 1, les deux éléments diffractifs (14, 22) étant disposés de manière à ce qu'un faisceau incident soit réfléchi par l'élément de Fourier (14) et décomposé en n faisceaux (18, 20), chacun de ces faisceaux étant ensuite réfléchi par une des lentilles de Fresnel (22) vers un point de focalisation (F').

3. Dispositif optique de focalisation selon la revendication 1, les deux éléments (2, 4) étant disposés de manière à ce que le dispositif fonctionne en transmission.

4. Dispositif optique de focalisation selon l'une des revendications 1 à 3, comportant en outre des moyens (12) de collimation du faisceau lumineux incident.

5. Dispositif optique selon la revendication 4, les moyens de collimation comportant un élément réfractif (12).

6. Dispositif optique selon l'une des revendications 1 à 5, comportant en outre des moyens (112) pour effectuer une rotation, autour de l'axe optique, de l'élément diffractif (4) comportant n composants.

7. Dispositif pour engendrer un rayonnement laser focalisé, comportant :

   - des moyens (92) pour engendrer un faisceau laser (94, 100),
   - un dispositif optique de focalisation selon l'une des revendications 1 à 6.

8. Dispositif pour engendrer un rayonnement laser focalisé, selon la revendication 7, le faisceau laser étant transmis par fibre optique depuis les moyens (92) pour l'engendrer, vers le dispositif optique de focalisation.

9. Dispositif pour la découpe laser, comportant un dispositif pour engendrer un rayonnement laser focalisé selon l'une des revendications 7 ou 8.

10. Dispositif pour la découpe laser, selon la revendication 9, comportant en outre des moyens pour déclencher, de manière impulsionnelle et relaxée, les moyens (92) d'émission du faisceau laser.

11. Dispositif selon la revendication 8 et selon l'une des revendications 9 ou 10, l'extrémité de la fibre optique destinée à être orientée vers la tête de découpe faisant partie d'une tête de découpe.

12. Dispositif selon la revendication 8 et selon l'une des revendications 9 à 11, comportant en outre des moyens (105) permettant d'évaluer la distance entre l'extrémité de la fibre optique et une pièce à découper.

13. Dispositif selon la revendication 8 et selon l'une des revendications 9 à 12, comportant en outre des moyens de contrôle de la position de l'extrémité de la fibre et/ou des moyens de contrôle de la focalisation du faisceau.

14. Procédé de découpe laser d'une pièce (96) mettant en oeuvre un dispositif selon l'une des revendications 9 à 13.

15. Procédé selon la revendication 14, comportant les étapes suivantes :

    - mesure d'une distance (d) représentative de la distance entre le dispositif de découpe et la pièce (96),
    - comparaison de la distance (d) mesurée et de la distance focale (f) du dispositif optique de focalisation,
    - si f est différent de d, ajustement de f par rotation de l'élément diffractif comportant les n composants.

16. Procédé selon la revendication 15, la comparaison et l'ajustement étant réalisés en continu, pendant la découpe de la pièce (96).

17. Procédé selon l'une des revendications 15 ou 16, comportant en outre, lorsque d n'est pas dans la plage de variations de f de la suite continue de lentilles de Fresnel, l'ajustement de d par déplacement du dispositif de focalisation.

**Patentansprüche**

1. Optische Fokussiervorrichtung eines Lichtstrahls, umfassend:

   - ein Fourier-Beugungselement (2, 14), das ermöglicht, einen einfallenden Strahl (6) in n Strahlen (10-1, 10-2, 10-3, 10-4, 10-5, 18, 20) entsprechend n in Bezug auf die optische Achse (AA', BB') symmetrische Richtungen zu trennen,
   - ein n Komponenten (4-1, 4-2, ..., 4-8) umfassendes Beugungselement (4, 22), um die n Strahlen auf die optische Achse zu refokussieren, wobei jede der genannten n Komponenten eine Linse außerhalb der Achse umfasst, deren Fokaldistanz bei dem Beugungselement von einem Wert $f_1$ bis zu einem Wert $f_2$ transversal variiert und radial bei dem genannten Element konstant ist.

2. Optische Fokussiervorrichtung nach Anspruch 1, wobei die beiden Beugungselemente (14, 22) so angeordnet sind, dass ein einfallender Strahl durch das Fourier-Element (14) reflektiert und in n Strahlen (18, 20) zerlegt wird, wobei jeder dieser Strahlen anschließend durch eine Fresnel-Linse (22) auf einen Fokussierpunkt (F') reflektiert wird.

3. Optische Fokussiervorrichtung nach Anspruch 1, wobei die beiden Elemente (2, 4) so angeordnet sind, dass die Vorrichtung im Transmissionsbetrieb arbeitet.

4. Optische Fokussiervorrichtung nach einem der Ansprüche 1 bis 3, wobei sie außerdem Kollimationseinrichtungen (12) des einfallenden Lichtstrahls umfasst.

5. Optische Fokussiervorrichtung nach Anspruch 4, wobei die Kollimationseinrichtungen ein Brechungsselement (12) umfassen.

6. Optische Fokussiervorrichtung nach einem der Ansprüche 1 bis 5, wobei sie außerdem Einrichtungen (112) zur Erzeugung einer Rotation um die optische Achse umfassen, und das Beugungselement (4) n Komponenten umfasst.

7. Vorrichtung zur Erzeugung einer fokussierten Laserstrahlung, umfassend:

   - Einrichtungen (92) zum Erzeugen eines Laserstrahls (94, 100),
   - eine optische Fokussiervorrichtung nach einem der Ansprüche 1 bis 6.

8. Vorrichtung zur Erzeugung einer fokussierten Laserstrahlung nach Anspruch 7, wobei der Laserstrahl mittels optischer Faser von den Erzeugungseinrichtungen (92) zu der optischen Fokussiereinrichtung geleitet wird.

9. Laserschneidvorrichtung mit einer Vorrichtung zur Erzeugung eines fokussierten Laserstrahls nach einem der Ansprüche 7 oder 8.

10. Laserschneidvorrichtung nach Anspruch 9, mit außerdem Einrichtungen zum gepulsten und relaxierten Auskoppeln des Laserstrahls aus den Erzeugungseinrichtungen (92).

11. Vorrichtung nach Anspruch 8 und einem der Ansprüche 9 oder 10, wobei das die Verbindung mit dem Schneidkopf herstellende Ende der optischen Faser Teil eines Schneidkopfs ist.

12. Vorrichtung nach Anspruch 8 und einem der Ansprüche 9 bis 11, mit außerdem Einrichtungen (105), die ermöglichen, den Abstand zwischen dem Ende der optischen Faser und einem zu schneidenden Teil zu bewerten.

13. Vorrichtung nach Anspruch 8 und einem der Ansprüche 9 bis 12, mit außerdem Einrichtungen zur Kontrolle der Position des Endes der Faser und/oder Einrichtungen zur Kontrolle der Fokussierung des Strahls.

14. Laserschneidverfahren für ein Teil (96), wobei eine Vorrichtung nach einem der Ansprüche 9 bis 13 verwendet wird.

15. Verfahren nach einem der Ansprüche 14 mit folgenden Schritten:

   - Messen eines für den Abstand zwischen der Schneidvorrichtung und dem Teil (96) repräsentativen Abstands (d),
   - Vergleichen des gemessenen Abstands (d) und der Fokaldistanz (f) der optischen Fokussiervorrichtung,
   - Anpassen von f durch Rotation des die n Komponenten umfassenden Beugungselements, wenn f sich von d unterscheidet.

16. Verfahren nach Anspruch 15, wobei das Vergleichen und das Anpassen kontinuierlich erfolgen, während des Schneidens des Teils (96).

17. Verfahren nach einem der Ansprüche 15 oder 16, mit außerdem der Anpassung von d durch Verschiebung der Fokussiereinrichtung, wenn d sich nicht in dem Variierungsbereich von f der kontinuierlichen Folge von Fresnel-Linsen befindet.

**Claims**

1. An optical device for focusing a light beam, having:

   - a Fourier diffractive element (2, 14), which separates an incident beam (6) into n beams (10-1, 10-2, 10-3, 10-4, 10-5 18, 20), in n directions symmetrical with respect to an optical axis (AA', BB'),
   - a diffractive element (4, 22) having n components (4-1, 4-2, ..., 4-8), refocusing the n beams on the optical axis, each of the said n components having an off-axis lens whose focal length varies from a value $f_1$ to a value $f_2$ [transversely to the diffractive element and is constant radially to the said element].

2. An optical focusing device according to Claim 1, the two diffractive elements (14, 22) being disposed so that an incident beam is reflected by the Fourier element (14) and broken down into n beams (18, 20), each of these beams then being reflected by one of the Fresnel lenses (22) to a focusing point (F').

3. An optical focusing device according to Claim 1, the two elements (2, 4) being disposed so that the device functions in transmission.

4. An optical focusing device according to one of Claims 1 to 3, also having means (12) of collimating the incident light beam.

5. An optical device according to Claim 4, the collimation means including a refractive element (12).

6. An optical device according to one of Claims 1 to 5, also including means (112) for effecting a rotation, about the optical axis, of the diffractive element (4) having n components.

7. A device for generating a focused laser radiation, having:

   - means (92) for generating a laser beam (94, 100),
   - an optical focusing device according to one of Claims 1 to 6.

8. A device for generating a focused laser radiation according to Claim 7, the laser beam being transmitted by optical fibre from the means (92) for generating it, to the optical focusing device.

9. A device for laser cutting, including a device for generating a focused laser radiation according to one of Claims 7 or 8.

10. A device for laser cutting according to Claim 9, also having means for triggering, in a pulsed and relaxed manner, the means (92) of emitting the laser beam.

11. A device according to Claim 8 and according to one of Claims 9 or 10, the end of the optical fibre intended to be oriented towards the cutting head forming part of a cutting head.

12. A device according to Claim 8 and according to one of Claims 9 to 11, also having means (105) for assessing the distance between the end of the optical fibre and a part to be cut.

13. A device according to Claim 8 and according to one of Claims 9 to 12, also having means of controlling the position of the end of the fibre and/or means of controlling the focusing of the beam.

14. A method for the laser cutting of a part (96) using a device according to one of the claims 9 to 13.

15. A method according to claim 14, including the following steps:

   - measuring a distance (d) representing the distance between the cutting device and the part (96),
   - comparing the distance (d) measured and the focal distance (f) of the optical focusing device,
   - if f is different from d, adjusting f by rotation of the diffractive element having the n components.

16. A method according to claim 15, the comparison and adjustment being effected continuously, during the cutting of the part (96).

17. A method according to one of the claims 15 or 16, also including, when d is not in the range of variations of f of the continuous series of Fresnel lenses, the adjustment of d by movement of the focusing device.

FIG.1A

FIG.1B

FIG. 2

FIG. 8

FIG. 3

FIG. 4 A

FIG. 4 B

FIG. 4 C

FIG. 5A

FIG. 5B

FIG. 5 C

FIG. 5D

FIG. 6 A

FIG. 6 B

FIG. 6 C

FIG. 6 D

FIG. 7